(19) **Europäisches Patentamt**

**European Patent Office**

**Office européen des brevets**

(11) **EP 0 743 441 B1**

(12) **EUROPEAN PATENT SPECIFICATION**

(45) Date of publication and mention
of the grant of the patent:
**05.03.2003 Bulletin 2003/10**

(51) Int Cl.7: **F02D 41/40**

(21) Application number: **96107708.8**

(22) Date of filing: **14.05.1996**

(54) **Electronically controlled fuel injection apparatus for a diesel engine**

Elektronisch gesteuerte Kraftstoffeinspritzanlage für einen Dieselmotor

Appareil d'injection de carburant à commande électronique pour moteur diesel

(84) Designated Contracting States:
**DE FR GB**

(30) Priority: **16.05.1995 JP 11730495**

(43) Date of publication of application:
**20.11.1996 Bulletin 1996/47**

(73) Proprietor: **TOYOTA JIDOSHA KABUSHIKI KAISHA**
**Aichi-ken (JP)**

(72) Inventors:
• **Mikio, Kizaki, c/o Toyota Jidosha K.K.**
**Toyota-shi, Aichi-ken (JP)**

• **Naoyuki, Tsuzuki, c/o Toyota Jidosha K.K.**
**Toyota-shi, Aichi-ken (JP)**

(74) Representative:
**Leson, Thomas Johannes Alois, Dipl.-Ing. et al**
**c/o TBK-Patent,**
**P.O. Box 20 19 18**
**80019 München (DE)**

(56) References cited:
**DE-A- 3 524 387**      **US-A- 5 115 783**
**US-A- 5 345 916**

• **PATENT ABSTRACTS OF JAPAN vol. 014, no. 193 (M-0963), 19 April 1990 & JP 02 037153 A (NIPPON DENSO CO LTD), 7 February 1990**

**Description**

BACKGROUND OF THE INVENTION

1. Field of the Invention

The present invention relates to an electronically controlled fuel injection apparatus for a diesel engine and, more particularly, to an electronically controlled fuel injection apparatus which pressurizes fuel supplied to the diesel engine under a prestroke control.

2. Description of the Related Art

An electronically controlled fuel injection apparatus comprising the features summarized in the pre-characterizing clauses of claims 1 and 3 is known from document JP-A-02 037 153.

This known fuel injection apparatus has a distributor type electronically controlled fuel injection pump and a spill valve. The fuel injection pump pressurizes and delivers fuel by a reciprocation of a plunger provided therein. The spill valve is connected to a pump chamber of the fuel injection pump so as to control delivery timing of the pressurized fuel.

The plunger of the above-mentioned fuel injection pump is driven by a camming action so that travel speed of the plunger is varied as a travel of stroke is varied. In this case, an amount of fuel delivered per unit time by the plunger is varied according to the travel of the plunger. The amount of the fuel delivered per unit time is referred to as a fuel delivery rate. Additionally, fuel in the pump chamber is pressurized only when the spill valve is closed.

Accordingly, in the above-mentioned fuel injection apparatus, the same amount of fuel can be injected at different fuel delivery rates by controlling the travel of the plunger before the spill valve is closed and the position of the plunger when the spill valve is open. Hereinafter, travel of the plunger before the spill valve is closed is referred to as a prestroke amount, and the position of the plunger when the spill valve is opened is referred to as an injection end timing.

In the above-mentioned construction, when the engine is operated under a relatively small load condition, both the prestroke amount and the injection end timing are controlled. This control is referred to as a prestroke control. When the engine is operated under conditions other than the small load condition, only the injection end timing is controlled without controlling the prestroke amount so as to improve an output characteristic and an emission characteristic of the diesel engine.

The above-mentioned fuel injection pump is driven in synchronization with a speed of the engine. Accordingly, travel speed of the plunger increases as the speed of the engine increases. Additionally, a fuel injection period during one cycle decreases as the speed increases. Particularly, when a load applied to the engine is small, the fuel injection amount is small. Thus, the fuel injection period becomes extremely short when the engine is operated under a small load and at a high speed.

In order to perform the prestroke control when the engine is operated at a high speed, the spill valve must be closed and opened again in a very short time period. In such a condition, since the travel speed of the plunger is high and thus the fuel delivery rate is large, the pressure of the fuel in the pump chamber is increased even when the spill valve is not completely closed. This results in a premature injection of fuel. This phenomenon is referred to as a so-called spill choke. If the spill choke occurs, it is difficult to perform an accurate control of the fuel injection amount.

Additionally when the spill valve reaches a completely closed state, the spill valve is subjected to a bouncing effect. If the spill valve is opened under the bouncing effect, the spill valve is operated with an excessively quick response. Thus, the fuel injection period is extremely shortened. Accordingly, when the fuel injection period is controlled by using the spill valve, it is difficult to accurately control the fuel injection amount in a condition in which a command to open the spill valve is supplied within an extremely short time period after a command to close the spill valve is supplied. Thus, the conventional fuel injection apparatus, in which the prestroke control is performed when the engine is operated under a small load, has a problem in that an optimum operating condition of the engine is deteriorated under conditions of high speed and a small fuel injection amount.

An electronically controlled fuel injection apparatus comprising the features summarized in the pre-characterizing clauses of claims 1 and 3 is also known from document US-A-5 115 783. In this known fuel injection apparatus, the prestroke amount is increased as the target fuel injection amount is decreased. In determining the prestroke amount, neither the engine speed nor the intake air temperature and the cooling-water temperature are taken into account.

SUMMARY OF THE INVENTION

It is an object of the present invention to further develop the electronically controlled fuel injection apparatus according to document JP-A-02037153 such that an accurate control of the fuel injection amount can be performed even when the engine is operated under a small load at a high engine speed.

According to one aspect of the present invention, this object is achieved by the fuel injection apparatus according to claim 1. According to another aspect of the present invention, this object is achieved by the fuel injection apparatus according to claim 3.

Advantageous further developments of the fuel injection apparatuses according to the invention are defined in the dependent claims.

Other objects, features and advantages of the present invention will become more apparent from the following detailed description when read in conjunction with the accompanying drawings.

BRIEF DESCRIPTION OF THE DRAWINGS

FIG.1 is a cross-sectional view of a distributor type electronically controlled fuel injection pump provided in a fuel injection apparatus according to the present invention;
FIG.2 is an illustration of an entire diesel engine associated with the fuel injection pump shown in FIG. 1;
FIG.3 is a time chart of a lift of a plunger with reference to a closing time and an opening time of a spill valve;
FIG.4 is a graph showing variations in a lift of the spill valve when an engine is operated in a high-speed and small injection amount condition;
FIG.5 is a graph showing variation of a fuel injection amount when a prestroke control is performed with a relatively large prestroke amount in the high-speed and small injection amount condition;
FIG.6 is a graph showing variation of a fuel injection amount when a prestroke control is performed with a relatively small prestroke amount in the high-speed and small injection amount condition;
FIG.7 is a flowchart of an example of a process for calculating a prestroke amount executed by an ECU shown in FIG.2;
FIG.8 is an illustration of a map used in the process for calculating the prestroke amount; and
FIG.9 is a flowchart of another example of a process for calculating a prestroke amount executed by an ECU shown in FIG.2.

DETAILED DESCRIPTION OF THE PREFERRED EMBODIMENT

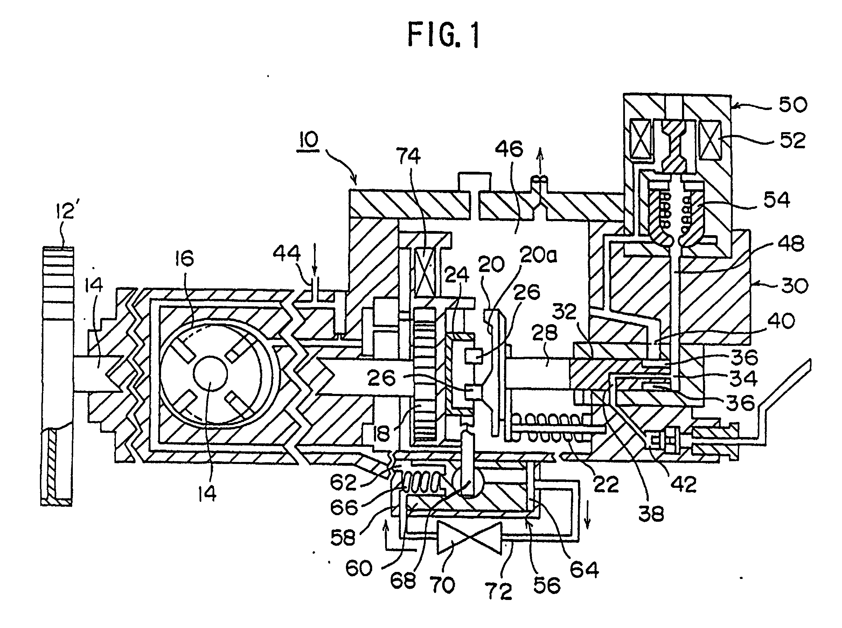

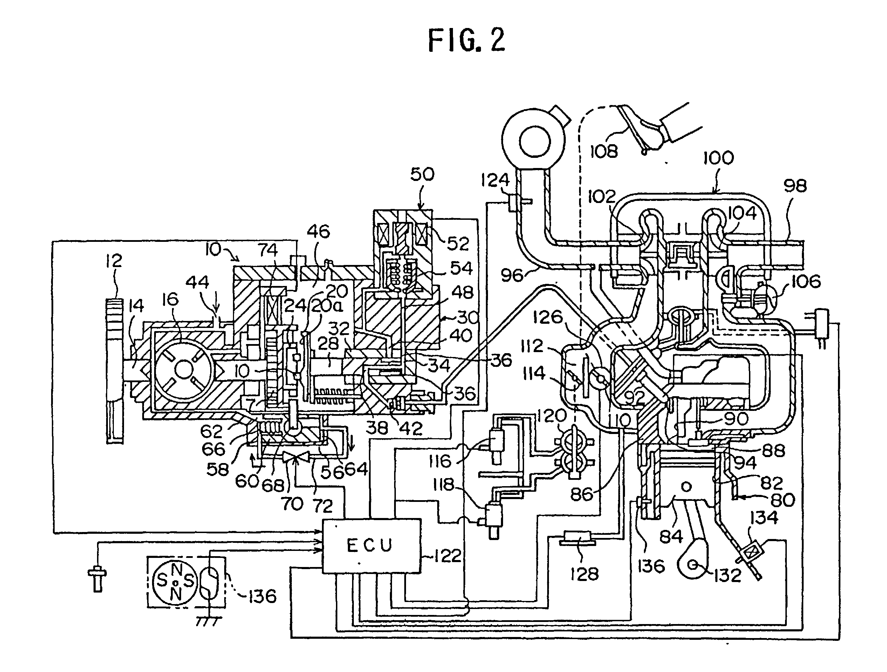

A description will now be given, with reference to FIGS.1 and 2, of an embodiment of an electronically controlled fuel injection apparatus according to the present invention. FIG.1 is a cross-sectional view of a distributor type electronically controlled fuel injection pump 10 (hereinafter, simply referred to as a fuel injection pump 10) provided in the fuel injection apparatus. FIG.2 is an illustration of an entire diesel engine 80 associated with the fuel injection pump 10.

As shown in FIG.1, the fuel injection pump 10 has a drive pulley 12 coupled with a crank shaft 132 of the diesel engine 80 via a pulley belt (not shown in the figures). The fuel injection pump 10 is driven when the drive pulley 12 is rotated. Fuel is delivered to a fuel injection nozzle 92 provided to each cylinder of the diesel engine 80, and the fuel is injected into each engine cylinder. In this case, the diesel engine 80 has four engine cylinders.

The drive pulley 12 of the fuel injection pump 10 is mounted on an end of a drive shaft 14. A fuel feed pump 16 is provided in the middle of the drive shaft 14. It should be noted that the fuel feed pump 16 is shown in a 90 degrees turned view in FIGS.1 and 2 for the sake of easy understanding. Additionally, a disk-like pulser 18 is mounted on an inner end of the drive shaft 14. The pulser 18 has a plurality of protrusions or teeth on an outer circumference thereof, the protrusions or teeth being arranged at equal angle intervals. Hereinafter, the protrusions or teeth are simply referred to as teeth. In the present case, four tooth cut-out parts are formed at equal angle intervals. The tooth cut-out part is a portion of the outer periphery of the pulser 18 in which a tooth or teeth are not formed. The number of tooth cut-out parts corresponds to the number of engine cylinders. The inner end of the drive shaft 14 is connected to a cam plate 20 via a coupling (not shown in the figures).

A roller ring 24 is provided between the pulser 18 and the cam plate 20. A plurality of cam rollers 26 are mounted on the roller ring 24 along a circumference so that the cam rollers 26 face cam faces 20a formed on the cam plate 20. The number of cam faces 20a is equal to the number of the engine cylinders of the diesel engine 80. The cam plate 20 is pressed against the cam rollers 26 by a spring 22.

The cam plate 20 is fixed to an end of a plunger 28 which pressurizes fuel introduced into a cylinder 32. The cam plate 20 and the plunger 28 are rotated together by a rotation of the drive shaft 14. That is, a rotational force of the drive shaft 14 is transmitted to the cam plate 20 via the coupling. The cam plate 20 engages with the cam rollers 26 while it is rotated. Thus, the cam plate 20 reciprocates in an axial direction of the drive shaft 14 while it is rotated by the drive shaft 14. Accordingly, the plunger 28 assembled with the cam plate 20 reciprocates in the cylinder 32 while it is rotated. More specifically, when the cam faces 20a of the cam plate 20 ride on the cam rollers 26 of the roller ring 24, the plunger 28 is moved forward, and when the cam faces 20a ride off from the cam rollers 26, the plunger 28 is moved backward.

The plunger 28 is inserted into the cylinder 32 formed in a pump housing 30. A pump chamber 34 is formed between an end surface of the plunger 28 and a bottom surface of the cylinder 32. An outer surface of the plunger 28 near the end thereof is provided with a plurality of grooves 36 and a distribution port 38. A plurality of distribution passages 42 and an inlet port 40 are provided in the pump housing 30 to form a fuel passage from the inlet side to the outlet side.

When the fuel feed pump 16 is driven by rotation of the drive shaft 14, fuel is supplied to a fuel chamber 46 from a fuel tank (not shown in the figures) via a fuel supply port 44. The fuel in the fuel chamber 46 is introduced into the pump chamber 34 when the plunger 28 is moved backward and one of the grooves 16 connects to the inlet port 40. The fuel introduced into the pump chamber 34 is pressurized by the forward movement of the plunger 28, and the pressurized fuel is delivered to the fuel injection nozzle 92 via one of the distributor passages 38.

The pump housing 30 is provided with a spill passage 48 for spilling the fuel by allowing the pump chamber 34 to communicate with the fuel chamber 46. An electromagnetic spill valve 50 which serves as a valve for adjusting the spill of the fuel from the pump chamber 34 is provided in the spill passage 48. The electromagnetic spill valve 50 is a normally opened valve. When a coil 52 is not energized (i.e. in an OFF state), a valve body 54 is open so that the fuel in the pump chamber 34 is spilled to the fuel chamber 46. When the coil 52 is energized (i.e. in an ON state), the valve body 54 is closed so that the fuel is prevented from spilling from the pump chamber 34 to the fuel chamber 46.

The electromagnetic spill valve 50 is opened or closed in response to the timing control at which the coil 52 of the electromagnetic spill valve 50 is energized. In this way, the amount of fuel spilled from the pump chamber 34 to the fuel chamber 46 is adjusted. By opening the electromagnetic spill valve 50 during a compression stroke (forward movement) of the plunger 28, the pressure of the fuel in the pump chamber 34 is reduced, and the fuel injection from the fuel injection nozzle 92 is halted. That is, the fuel pressure in the pump chamber 34 cannot be increased by moving the plunger 28 forward as long as the electromagnetic spill valve 50 is open. Hence, the fuel injection from the fuel injection nozzle 92 does not take place. The amount of the pressurized fuel delivered to the distribution passages 42 is controlled, separately from the movement of the plunger 28, by controlling the timing at which the electromagnetic spill valve 50 is opened or closed during the forward movement of the plunger 28.

A timer unit 56 (shown in a 90° turned view in FIGS. 1 and 2) for adjusting the timing of the fuel injection is provided below the pump housing 30. The timer unit 56 modifies the position of the roller ring 24 in the rotational direction of the drive shaft 14 so as to modify the timing at which the cam faces 20a are engaged with the cam rollers 26, that is, the timing of the reciprocating motion of the cam plate 20 and the plunger 28.

The timer unit 56 is hydraulically driven and comprises a timer housing 58, a timer piston 60 fitted in the timer housing 58, and a timer spring 66 which, provided in a low-pressure chamber 62 of the timer housing 58, urges the timer piston 60 toward a pressurized chamber 64. The timer piston 60 is connected to the roller ring 24 via a slide pin 68.

The fuel, which is pressurized by the fuel feed pump 16, is introduced into the pressurized chamber 64 of the timer housing 58. The position of the timer piston 60 is determined according to a balancing relationship between the fuel pressure and the urging force of the timer spring 66. As the position of the timer spring 66 is determined, the position of the roller ring 24 is determined, and thus the timing of the reciprocal motion of the cam plate 20 and the plunger 28 is determined.

A timing control valve 70 for adjusting the fuel pressure (that is, a control fuel pressure) of the timer unit 56 is provided in the timer unit 56. That is, the pressurized chamber 64 and the low-pressure chamber 62 of the timer housing 58 are allowed to communicate with each other via a communicating passage 72. The timing control valve 70 is provided in the communicating passage 72. The timing control valve 70 is an electromagnetic valve which is opened or closed in accordance with an energizing signal subject to duty control. Opening and closing of the timing control valve 33 adjusts the fuel pressure in the pressurized chamber 64. By adjusting the fuel pressure, the position of the roller ring 24 can be changed, resulting in a change in the timing of the movement of the plunger 28 with respect to an angular position of the drive shaft 14.

A revolution sensor 74 comprised of an electromagnetic pickup is provided above the roller ring 24 so as to face the periphery of the pulser 18. The revolution sensor 74 detects a variation in the magnetic flux as the teeth in the pulser 18 traverse a space below the revolution sensor 74, and outputs a pulse signal, that is, engine revolution pulses, corresponding to an engine speed. In other words, the revolution sensor 74 outputs a revolution-angle signal for each predetermined crank angle. When the tooth cut-out portion traverses the vicinity of the revolution sensor 74, no pulse signal is output from the revolution sensor 74. By detecting a timing of the pulse signal output from the revolution sensor 74, an angular position of the drive shaft 14, that is, the rotational angle of the diesel engine can be detected.

A description will now be given of the diesel engine 80. The diesel engine 80 has four engine cylinders. A main combustion chamber 88 corresponding to each of the engine cylinders of the diesel engine 80 comprises a cylinder 82, a piston 84 and a cylinder head 86. The main combustion chamber 88 is connected to a subsidiary combustion chamber 90 provided in correspondence to each of the engine cylinders. The fuel injected from the respective fuel injection nozzle 92 is supplied to the subsidiary combustion chamber 90. The subsidiary combustion chamber 90 is provided with a known glow plug 94 as a start assisting device.

The diesel engine 80 is provided with an intake pipe 96 and an exhaust pipe 98. The intake pipe 96 is provided with a compressor 102 of a turbocharger 100 provided as a supercharger. The exhaust pipe 98 is provided with a turbine 104 of the turbocharger 100. The exhaust pipe 98 is also provided with a waste gate valve 106 for adjusting the supercharge pressure.

A throttle valve 110 which is opened and closed in cooperation with actuation of an accelerator pedal 108 is provided in the intake pipe 96. A bypass passage 112 is provided to be parallel with the throttle valve 110, and a bypass throttle valve 114 is provided in the bypass passage 112.

The bypass throttle valve 114 is controlled so as to be opened or closed by an actuator 120 having divided diaphragm chambers driven under the control of two VSVs 116 and 118. The bypass throttle valve 114 is opened or closed responsive to the running state of the diesel engine 80. For example, when the diesel engine 80 is in an idle running state, the bypass throttle valve 114 is half open in order to reduce undesired noise and oscillation. When the diesel engine 80 is in a normal running state, the bypass throttle valve 114 is fully open. When the operation of the diesel engine 80 is stopped, the bypass throttle valve 114 is closed so as to achieve a smooth stop of the diesel engine 80.

The electromagnetic spill valve 50, the timing control valve 70, the glow plug 94 and the VSVs 116 and 118 are electrically connected to an electronic control unit (hereinafter, referred to as ECU) 122. The ECU 122 controls the timing at which the foregoing components are driven.

In addition to the revolution sensor 74, various sensors such as the followings are provided so as to detect the running state of the diesel engine 80. An intake air temperature sensor 124 for detecting an inlet air temperature THA is provided in the intake pipe 96. An accelerator opening sensor 126 for detecting an accelerator opening degree ACCP corresponding to a load of the diesel engine 80 is provided at the throttle valve 110. Downstream of the throttle valve 110, an intake pressure sensor 128 for detecting the supercharge pressure is provided, the supercharge pressure being a pressure of the intake air supercharged by the turbocharger 100. Further, a water temperature sensor 130 for detecting the temperature THW of a cooling-water of the diesel engine 80 is provided in a cylinder block of the diesel engine 80. A crank angle sensor 134 for detecting a rotational reference position of a crank shaft 132 of the diesel engine 80 is provided. For example, the crank angle sensor 134 detects the rotational position of the crank shaft 132 with respect to a top dead center of a specific engine cylinder. Further, there is provided a vehicle speed sensor 136 for detecting a vehicle speed by detecting a rotational speed of an output shaft of a transmission mechanism.

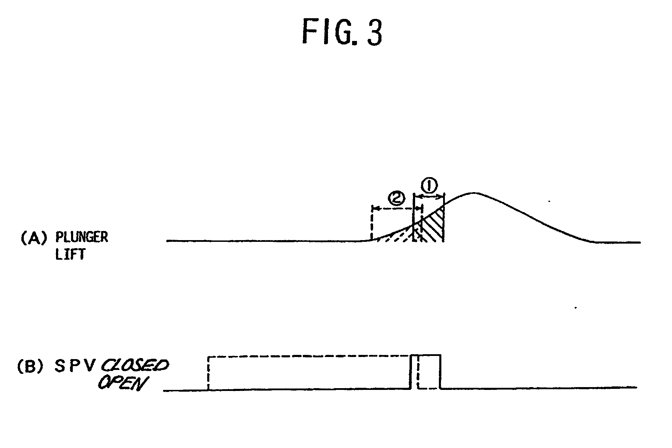

A description will now be given of an operation of the fuel injection apparatus according to the present embodiment. As mentioned-above, in the fuel injection apparatus according to the present invention, an injection of fuel is performed only when the spill valve 50 is closed Accordingly, if a lift of the plunger 28 of the fuel injection pump 10 is varied as shown in FIG.3-(A), the duration indicated by a circled number 1 becomes equal to the fuel injection period when the spill valve 23 is closed and opened as shown by solid lines of FIG.3-(B). If the spill valve 23 is closed and opened as shown by dotted lines of FIG.3-(B), a duration indicated by a circled number 2 in FIG.3-(A) becomes equal to the fuel injection period.

In the diesel engine 80, the fuel injection must be preformed at an appropriate timing so that an ignition occurs in each engine cylinder at an appropriate timing during a compression stroke. Accordingly, opening and closing of the spill valve 50 must be performed basically by referring to a crank angle detected by the crank angle sensor 134. However, in the present embodiment, the relationship between the timing of the movement of the plunger 28 and the crank angle of the diesel engine can be changed by the function of the timer unit 56. Accordingly, in the present embodiment, a different lift of the plunger 28 can be selected for the fuel injection period as indicated by the circled numbers 1 or 2 shown in FIG.3-(A) while an appropriate timing is maintained with respect to the crank angle.

In order to achieve preferable emission characteristics of the diesel engine 80, it is effective to increase combustionability by promoting a fine mist spraying of the fuel injected in the combustion chamber 88. The fine mist spray is achieved by injecting fuel at a high-pressure. This can be achieved by providing the plunger 28 with a relatively large prestroke amount.

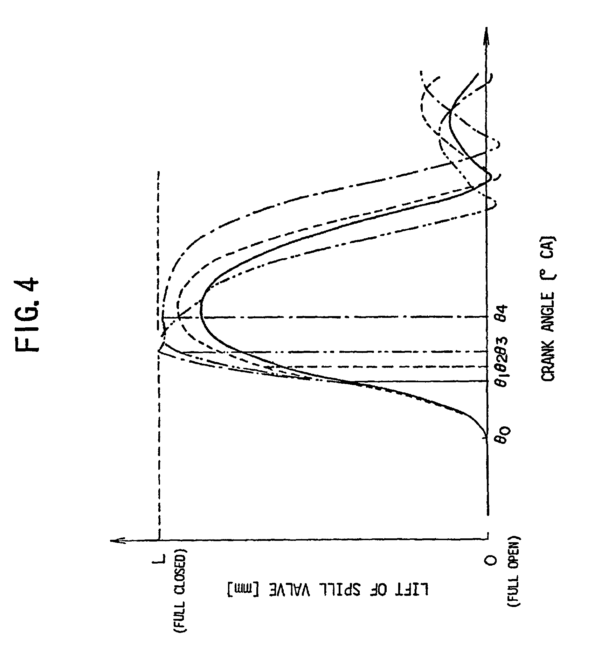

However, when a large prestroke amount is provided in a condition where the engine revolution speed NE is high and the fuel injection amount is small, that is, in a high-speed and small injection amount condition, it may happen that the fuel injection amount cannot be controlled. A description will now be given, with reference to FIG.4, of the reason why such an undesirable condition occurs. FIG.4 shows a relationship between a lift (a closing degree) of the spill valve 50 and a crank angle when a target value of the fuel injection amount is varied in the high-speed and small injection amount condition.

In FIG.4, curves indicated by a solid line, a dotted line, a double dashed chain line and a single dashed chain line represent variations in the lift of the spill valve 50 when an open command is supplied a very short time after a closed command is supplied to the spill valve 50 at a crank angle of $\theta_0$ degrees. The solid line corresponds to the variation when the open command is supplied at a crank angle of $\theta_1$ degrees. The dotted line corresponds to the variation when the open command is supplied at a crank angle of $\theta_2$ degrees. The double dashed chain line corresponds to the variation when the open command is supplied at a crank angle of $\theta_3$ degrees. The double dashed chain line corresponds to the variation when the open command is supplied at a crank angle of $\theta_4$ degrees.

When a relatively large prestroke amount is provided, the fuel is delivered by the plunger 28 at a high fuel delivery rate. Additionally, if the diesel engine 80 is operated at a high speed, the plunger 28 is moved at a high travel speed. Thus, when a relatively high prestroke amount is provided at a high speed of the engine 80, the pressure in the pump chamber 34 is rapidly increased after the closing operation of the spill valve 50 starts.

If the pressure in the pump chamber 34 is rapidly increased during a closing process of the spill valve 50, the pressure in the pump chamber 34 reaches a pressure necessary for the fuel injection before the spill valve is fully closed. Thus, the fuel injection is started before the spill valve is fully closed. As previously mentioned, this phenomenon is referred to as the spill choke. The spill choke occurs when the engine revolution speed NE is high and a large prestroke amount is provided.

In the condition where the spill choke may occur, when operation of the diesel engine 80 goes to the small injection amount condition, the period between the closing time and the opening time of the spill valve 50 is shortened which results in an incomplete closing of the spill valve 50 as indicated by the solid line or the dotted line. As a result, fuel injection is performed only by the spill choke, and thus an accurate control of the fuel injection amount cannot be performed.

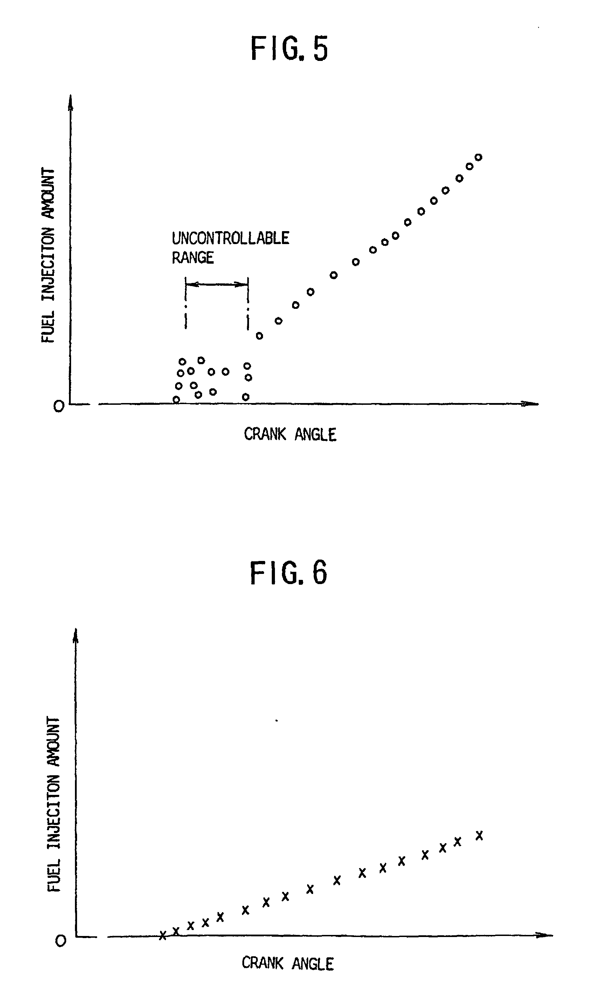

Additionally, as shown by the double dashed chain line in FIG.4, when the open command is supplied at the crank angle $\theta_3$ immediately before the lift of the spill valve 50 reaches a fully closed state, the spill valve 50 is fully open faster than under conditions in which the open command is supplied at the crank angle of $\theta_1$ or $\theta_2$ which is before the crank angle $\theta_3$. This is because the bouncing effect is in synchronization with a timing of the spill valve 50 reaching the fully closed state. This phenomenon is also an undesired condition. Accordingly, when the fuel injection is performed with a large prestroke amount under the high-speed and small injection amount condition, there is a crank angle range in which the fuel injection amount cannot be accurately controlled as shown in FIG.5.

If the prestroke amount is controlled to be small under the high-speed and small injection amount condition, that is, if the closing time of the spill valve 50 is set to a range of the cam lift where the fuel delivery rate is small, the increasing speed of the pressure in the pump chamber 34 can be reduced. This results in reduction in the amount of fuel injected due to the spill choke. Additionally, since the fuel delivery rate is decreased, the duration in which the spill valve 50 is closed can be extended, resulting in a fuel injection performed while the spill valve 50 is positively closed.

As mentioned above, if the prestroke amount is appropriately reduced responsive to operational conditions of the diesel engine 80, the above-mentioned problems are eliminated. That is, if the fuel injection is performed with an appropriately reduced prestroke amount under the high-speed and small injection amount condition, an accurate control of the fuel injection amount can be achieved over an entire range of the crank angle as shown in FIG.6.

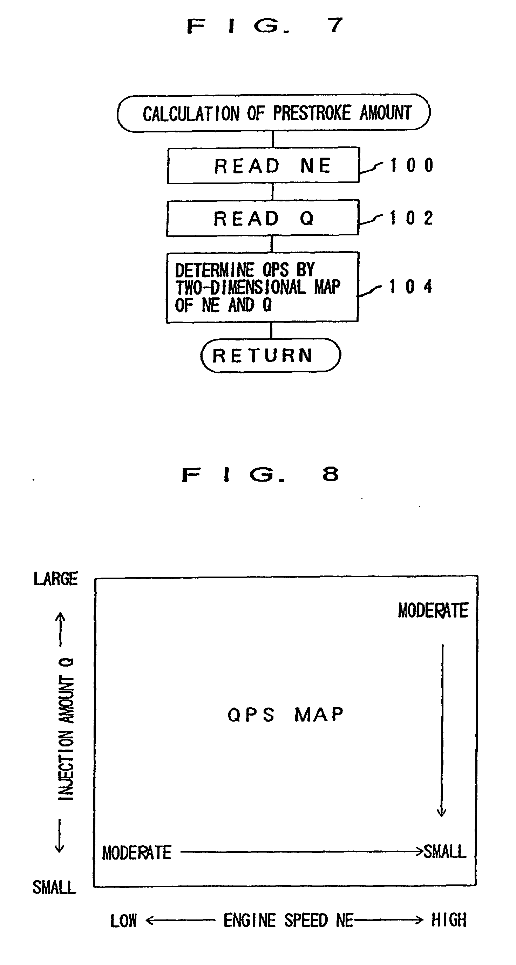

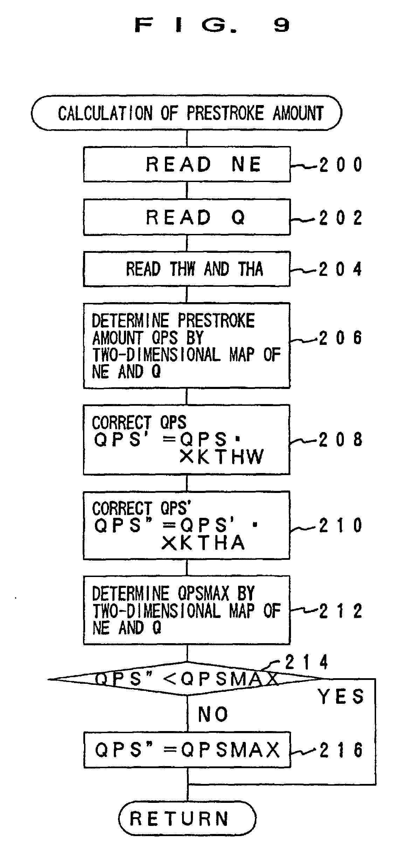

FIG.7 is a flowchart of an example of a process for calculating the prestroke amount executed by the ECU 122 which achieves the above-mentioned merits. FIG.8 is an illustration of a map used in the process for calculating the prestroke amount QPS. When the process shown in FIG.7 is started, the engine revolution speed NE is read in step 100. In step 102, a target fuel injection amount Q calculated in another process is read. In step 104, an appropriate prestroke amount QPS is obtained by using the map shown in FIG.8 based on the engine speed NE and the target fuel injection amount Q, and the routine is ended.

The map shown in FIG.8 is configured such that the prestroke amount QPS is decreased as the engine revolution speed NE is increased or the target fuel injection amount Q is decreased. In other words, in the QPS map shown in FIG.8, the prestroke amount QPS is decreased toward the high-speed and small injection amount condition so that the condition where the fuel injection is performed only by the spill choke is never established over an entire operational condition range of the diesel engine 80. Accordingly, in the present embodiment, the spill valve 50 is positively closed for each fuel injection process, and the open command is not supplied before the spill valve is fully closed. Thus, the bouncing effect of the spill valve 50 does not influence the period during which the spill valve 50 is closed. This results in an accurate control of the fuel injection amount over the entire operational range of the diesel engine 2.

In the process shown in FIG.7, the prestroke amount QPS is determined based on the engine speed NE and the target fuel injection amount Q. The prestroke amount QPS may be corrected in response to the intake air temperature THA and the cooling-water temperature THW. If a correction of the prestroke amount QPS is made after the prestroke amount is determined by the QPS map shown in FIG.8, the finally obtained prestroke amount QPS may cause the uncontrollable range of the fuel injection amount shown in FIG.5. In order to eliminate this problem, the prestroke amount QPS after the correction must be within a range in which the uncontrollable condition does not occur.

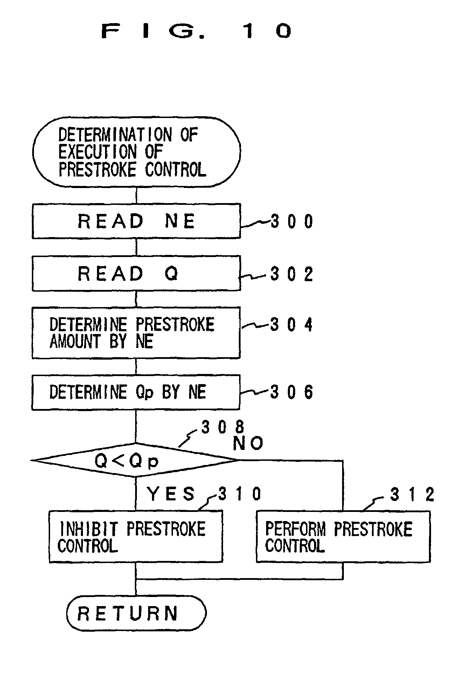

FIG.9 is a flowchart of a process performed by the ECU 122 for calculating the prestroke amount which is corrected based on the intake air temperature and the cooling-water temperature. When the process shown in FIG.9 is started, the engine speed NE is read in step 200. In step 202, the target fuel injection amount Q is read. In step 204, the intake air temperature THA and the cooling-water temperature THW are read.

In step 206, the prestroke amount QPS is obtained in accordance with a basic two-dimensional map of the engine speed NE and the target fuel injection amount. The basic two-dimensional map was prepared based on the output characteristics and the emission characteristics of the diesel engine 80 without considering elimination of the uncontrollable range of the fuel injection amount. Accordingly, if the fuel injection is performed at this stage, there is a possibility that the fuel injection amount is not accurately controlled in the high-speed and small injection amount condition due to the reason discussed above with reference to FIG.5.

In step 208, the prestroke amount QPS obtained in step 206 is corrected based on the cooling-water temperature THW. Specifically, a corrected prestroke amount QPS' is calculated by the following equation, where XKTHW is a correction factor which is a function of the cooling-water temperature THW.

$$QPS'=QPS \cdot XKTHW$$

In step 210, the corrected prestroke amount QPS' obtained in step 208 is corrected further based on the intake air temperature THA. Specifically, a corrected prestroke amount QPS" is calculated by the following equation, where XKTHA is a correction factor which is a function of the intake air temperature THA.

$$QPS''=QPS' \cdot XKTHA$$

In step 212, a maximum prestroke amount QPSMAX is obtained by another two-dimensional map of the engine speed NE and the fuel injection amount Q. This two-dimensional map was prepared so that the maximum prestroke amount can be obtained by which the uncontrollable range of the fuel injection amount is eliminated.

In step 214 it is determined whether or not the corrected prestroke amount QPS" is less than the maximum prestroke amount. If the corrected prestroke amount QPS" is less than the maximum prestroke amount QPSMAX, it is determined that the corrected prestroke amount QPS" is an appropriate prestroke amount, and the routine is ended. On the other hand, if it is determined that the corrected prestroke amount QPS" is not less than the maximum prestroke amount QPSMAX, the routine proceeds to step 216 so as to substitute the maximum prestroke amount QPSMAX for the corrected prestroke amount QPS", and then the routine is ended.

In the process shown in FIG.9, the finally obtained prestroke amount QPS" does not cause the uncontrollable range of the fuel injection amount over any operational conditions of the diesel engine 80. Additionally, by using the finally obtained prestroke amount QPS", the diesel engine 80 can be operated in a good condition where the output characteristics and the emission characteristics are maintained in a preferable state. Accordingly, if the ECU 122 executes the process shown in FIG.9, an accurate control of the fuel injection can be achieved in an entire operational range without deteriorating the output characteristics and the emission characteristics of the diesel engine 80.

In the above-mentioned embodiment, the process for controlling the prestroke amount is performed by the ECU 122 based on the engine revolution pulses output from the revolution sensor 74, and the ECU 122 supplies the open command for opening the spill valve 50 during the process for delivering the pressurized fuel.

## Claims

1. An electronically controlled fuel injection apparatus for a diesel engine (80), comprising:

   a distributor type electronically controlled fuel injection pump (10) having a spill valve (50) for spilling a fuel pressurized in a pump chamber (34) of said fuel injection pump (10), a prestroke control being performed for setting a prestroke amount which is defined as a period from a time when the pressurization of the fuel in said pump chamber (34) is started to a time when said spill valve (50) is closed so that a closing time of said spill valve (50) is set at a predetermined time in a process for delivering the fuel from said pump chamber (34),

   **characterized in that**
   the prestroke amount is determined based on an engine speed of said diesel engine (80) and a target fuel injection amount so that the prestroke amount is decreased as said engine speed is increased and as said target fuel injection amount is decreased so that an uncontrollable state of a fuel injection amount is eliminated when said diesel engine is operated in a high-speed and small injection amount condition.

2. The electronically controlled fuel injection apparatus as claimed in claim 1, **characterized in that** the prestroke amount is determined by a two-dimensional map of said engine speed and said target fuel injection amount.

3. An electronically controlled fuel injection apparatus for a diesel engine (80), comprising:

   a distributor type electronically controlled fuel injection pump (10) having a spill valve (50) for spilling a fuel pressurized in a pump chamber (34) of said fuel injection pump (10), a prestroke control being performed for setting a prestroke amount which is defined as a period from a time when the pressurization of the fuel in said pump chamber (34) is started to a time when said spill valve (50) is closed so that a closing time of said spill valve (50) is set at a predetermined time in a process for delivering the fuel from said pump chamber (34),

   **characterized in that**.

   a first prestroke amount is determined based on an engine speed of said diesel engine (80) and a target fuel injection amount;

the determined first prestroke amount is corrected based on an intake air temperature and a cooling-water temperature of said diesel engine (80);

a maximum prestroke amount is determined based on said engine speed and said fuel injection amount, the maximum prestroke amount being an upper limit of the prestroke amount so as to prevent an uncontrollable state of the fuel injection amount;

the prestroke amount is set to the maximum prestroke amount when the corrected prestroke amount is greater than the maximum prestroke amount; and

the prestroke amount is set to the corrected prestroke amount when the corrected prestroke amount is not greater than the maximum prestroke amount.

4. The electronically controlled fuel injection apparatus as claimed in claim 3, **characterized in that** the first prestroke amount is determined by a two-dimensional map of said engine speed and said target fuel injection amount.

5. The electronically controlled fuel injection apparatus as claimed in claim 3 or 4, **characterized in that** the maximum prestroke amount is determined by a two-dimensional map of said engine speed and said fuel injection amount.

**Patentansprüche**

1. Eine elektronisch gesteuerte Kraftstoffeinspritzanlage für einen Dieselmotor (80), mit:

einer elektronisch gesteuerten Kraftstoffeinspritzpumpe nach dem Verteilerprinzip (10) mit einem Überströmventil (50) zur Ermöglichung des Überströmens von Kraftstoff, der in einer Pumpenkammer (34) der genannten Kraftstoffeinspritzpumpe (10) mit Druck beaufschlagt wird, einer Vorhubsteuerung zur Steuerung einer Vorhubmenge, die als Zeitraum vom Beginn der Druckbeaufschlagung des Kraftstoffs in der genannten Pumpenkammer (34) bis zum Zeitpunkt des Schließens des genannten Überströmventils (50) definiert ist, die so ausgeführt wird, dass der Schließzeitpunkt des genannten Überströmventils (50) auf einen vorher bestimmten Zeitpunkt während der Dauer der Förderung des Kraftstoffs durch die genannte Pumpenkammer (34) festgelegt wird;

**dadurch gekennzeichnet, dass**

die Vorhubmenge auf der Basis der Motordrehzahl des genannten Dieselmotors (80) und einer Soll-Kraftstoff-Einspritzmenge so festgelegt wird, dass die Vorhubmenge verringert wird, wenn die genannte Motordrehzahl erhöht und wenn die genannte Soll-Kraftstoff-Einspritzmenge verringert wird, so dass ein Zustand mit einer nicht steuerbaren Kraftstoff-Einspritzmenge verhindert wird, wenn der genannte Dieselmotor (80) in einem Betriebszustand mit hoher Drehzahl und geringer Einspritzmenge betrieben wird.

2. Die elektronisch gesteuerte Kraftstoffeinspritzanlage gemäß Anspruch 1;
**dadurch gekennzeichnet, dass**
die Vorhubmenge auf der Basis eines zweidimensionalen Kennfeldes gebildet aus der genannten Motordrehzahl und der genannten Soll-Kraftstoff-Einspritzmenge festgelegt wird.

3. Eine elektronisch gesteuerte Kraftstoffeinspritzanlage für einen Dieselmotor (80), mit:

einer elektronisch gesteuerten Kraftstoffeinspritzpumpe nach dem Verteilerprinzip (10) mit einem Überströmventil (50) zur Ermöglichung des Überströmens von Kraftstoff, der in einer Pumpenkammer (34) der genannten Kraftstoffeinspritzpumpe (10) mit Druck beaufschlagt wird, einer Vorhubsteuerung zur Steuerung einer Vorhubmenge, die als Zeitraum vom Beginn der Druckbeaufschlagung des Kraftstoffs in der genannten Pumpenkammer (34) bis zum Zeitpunkt des Schließens des genannten Überströmventils (50) definiert ist, die so ausgeführt wird, dass der Schließzeitpunkt des genannten Überströmventils (50) auf einen vorher bestimmten Zeitpunkt während der Dauer der Förderung des Kraftstoffs durch die genannte Pumpenkammer (34) festgelegt wird;

**dadurch gekennzeichnet, dass**

eine erste Vorhubmenge auf der Basis der Motordrehzahl des genannten Dieselmotors (80) und einer Soll-Kraftstoff-Einspritzmenge festgelegt wird;

diese ermittelte erste Vorhubmenge auf der Basis der Zulufttemperatur und der Kühlwassertemperatur des genannten Dieselmotors (80) korrigiert wird;

eine maximale Vorhubmenge auf der Basis der genannten Motordrehzahl und Soll-Kraftstoff-Einspritzmenge festgelegt wird, wobei die maximale Vorhubmenge als oberer Grenzwert der Vorhubmenge definiert ist, mit der ein Zustand mit einer nicht steuerbaren Kraftstoff-Einspritzmenge verhindert wird;

die Vorhubmenge auf den Wert der maxima-

## EP 0 743 441 B1

len Vorhubmenge gesetzt wird, wenn die korrigierte Vorhubmenge größer als die maximale Vorhubmenge ist; und

die Vorhubmenge auf den Wert der korrigierten Vorhubmenge gesetzt wird, wenn die korrigierte Vorhubmenge nicht größer als die maximale Vorhubmenge ist.

**4.** Die elektronisch gesteuerte Kraftstoffeinspritzanlage gemäß Anspruch 3;
**dadurch gekennzeichnet, dass**

die erste Vorhubmenge auf der Basis eines zweidimensionalen Kennfeldes gebildet aus der genannten Motordrehzahl und der genannten Soll-Kraftstoff-Einspritzmenge festgelegt wird.

**5.** Die elektronisch gesteuerte Kraftstoffeinspritzanlage gemäß Anspruch 3 oder Anspruch 4;
**dadurch gekennzeichnet, dass**

die maximale Vorhubmenge auf der Basis eines zweidimensionalen Kennfeldes gebildet aus der genannten Motordrehzahl und der genannten Soll-Kraftstoff-Einspritzmenge festgelegt wird.

**Revendications**

**1.** Un appareil d'injection de carburant à commande électronique pour moteur diesel (80), comprenant :

une pompe d'injection de carburant à commande électronique du type distributeur (10) ayant une soupape de décharge (50) pour déverser un carburant pressurisé dans une chambre de pompage (34) de ladite pompe d'injection de carburant (10), une commande de course préalable étant réalisée pour fixer une quantité de course préalable qui est définie comme étant une durée allant du moment où la pressurisation du carburant dans ladite chambre de pompage (34) démarre jusqu'au moment où ladite soupape de décharge (50) se ferme de sorte qu'un temps de fermeture de ladite soupape de décharge (50) est fixé à un temps prédéterminé dans le processus de débiter le carburant de ladite chambre de pompage (34),

**caractérisé en ce que**
la quantité de course préalable est déterminée en se basant sur un régime de moteur dudit moteur diesel (80) et une quantité d'injection de carburant visée, de sorte que la quantité de course préalable diminue à mesure que ledit régime du moteur augmente et à mesure que ladite quantité d'injection de carburant visée diminue de sorte à éliminer un état incontrôlable de la quantité d'injection de carburant lorsque ledit moteur diesel tourné dans un état de haut régime et de petite quantité d'injection.

**2.** L'appareil d'injection de carburant à commande électronique selon la revendication 1, **caractérisé en ce que** la quantité de course préalable est déterminée par une carte de correspondance à deux dimensions entre ledit régime du moteur et ladite quantité d'injection de carburant visée.

**3.** Un appareil d'injection de carburant à commande électronique pour moteur diesel (80), comprenant :

une pompe d'injection de carburant à commande électronique du type distributeur (10) ayant une soupape de décharge (50) pour débiter un carburant pressurisé dans une chambre de pompage (34) de ladite pompe d'injection de carburant (10), une commande de course préalable étant réalisée pour fixer une quantité de course préalable qui est définie comme étant une durée allant du moment où la pressurisation du carburant dans ladite chambre de pompage (34) démarre jusqu'au moment où ladite soupape de décharge (50) se ferme de sorte qu'un temps de fermeture de ladite soupape de décharge (50) est fixé à un temps prédéterminé dans le processus de débiter le carburant de ladite chambre de pompage (34),

**caractérisé en ce que**,
une première quantité de course préalable est déterminée en se basant sur un régime de moteur dudit moteur diesel (80) et une quantité d'injection de carburant visée ;
la première quantité prédéterminée de course préalable est corrigée sur la base d'une température d'air d'admission et une température d'eau de refroidissement dudit moteur diesel (80),
une quantité maximale de course préalable est déterminée sur la base dudit régime du moteur et de ladite quantité d'injection de carburant, cette quantité maximale de course préalable étant une limite supérieure de la quantité de course préalable de sorte à empêcher un état incontrôlable de la quantité d'injection de carburant ;
la quantité de course préalable est fixée à la quantité maximale de course préalable lorsque la quantité corrigée de course préalable est supérieure à la quantité maximale de course préalable ; et
la quantité de course préalable est fixée à la quantité corrigée de course préalable lorsque la quantité corrigée de course préalable est inférieure ou égale à la quantité maximale de course préalable.

**4.** L'appareil d'injection de carburant à commande électronique selon la revendication 3, **caractérisé en ce que** la première quantité de course préalable est déterminée par une carte de correspondance à deux dimensions entre ledit régime du moteur et ladite quantité d'injection de carburant visée.

5. L'appareil d'injection de carburant à commande électronique selon la revendication 3 ou 4, **caractérisé en ce que** la quantité maximale de course préalable est déterminée par une carte de correspondance à deux dimensions entre ledit régime du moteur et ladite quantité d'injection de carburant visée.

FIG.1

FIG. 2

# FIG. 3

(A) PLUNGER LIFT

(B) S P V *CLOSED* / *OPEN*

FIG. 4

# FIG. 5

UNCONTROLLABLE
RANGE

FUEL INJECITON AMOUNT

CRANK ANGLE

# FIG. 6

FUEL INJECITON AMOUNT

CRANK ANGLE

# F I G. 7

```
   ┌────────────────────────────────────┐
   │  CALCULATION OF PRESTROKE AMOUNT   │
   └────────────────────────────────────┘
                     │
        ┌──────────────────────┐
        │     READ  NE         │──── 1 0 0
        └──────────────────────┘
                     │
        ┌──────────────────────┐
        │     READ  Q          │──── 1 0 2
        └──────────────────────┘
                     │
        ┌──────────────────────┐
        │ DETERMINE QPS BY     │
        │ TWO-DIMENSIONAL MAP  │──── 1 0 4
        │ OF NE AND Q          │
        └──────────────────────┘
                     │
           ┌──────────────┐
           │   RETURN     │
           └──────────────┘
```

# F I G. 8

LARGE

INJECTION AMOUNT Q

MODERATE

Q P S   M A P

MODERATE ──────────────→ SMALL

SMALL

LOW ←─────── ENGINE SPEED NE ──────→ HIGH

16

# F I G. 9

```
┌──────────────────────────────────┐
│ CALCULATION OF PRESTROKE AMOUNT  │
└──────────────────────────────────┘
                 │
    ┌────────────────────────┐
    │      READ  NE          │──200
    └────────────────────────┘
                 │
    ┌────────────────────────┐
    │      READ  Q           │──202
    └────────────────────────┘
                 │
    ┌────────────────────────┐
    │   READ  THW  AND  THA  │──204
    └────────────────────────┘
                 │
    ┌────────────────────────┐
    │ DETERMINE PRESTROKE    │
    │ AMOUNT QPS BY          │──206
    │ TWO-DIMENSIONAL MAP OF │
    │ NE AND Q               │
    └────────────────────────┘
                 │
    ┌────────────────────────┐
    │ CORRECT QPS            │
    │ QPS' =QPS ·            │──208
    │        ×KTHW           │
    └────────────────────────┘
                 │
    ┌────────────────────────┐
    │ CORRECT QPS'           │
    │ QPS" =QPS' ·           │──210
    │        ×KTHA           │
    └────────────────────────┘
                 │
    ┌────────────────────────┐
    │ DETERMINE QPSMAX BY    │
    │ TWO-DIMENSIONAL MAP OF │──212
    │ NE AND Q               │
    └────────────────────────┘
                 │
              ◇──────────────◇ ──214
           < QPS" <QPSMAX >
              ◇──────────────◇       YES
                 │ NO
                 │
    ┌────────────────────────┐
    │ QPS" =QPSMAX           │──216
    └────────────────────────┘
                 │
          ┌──────────────┐
          │   RETURN     │
          └──────────────┘
```

F I G.   1 0

DETERMINATION OF
EXECUTION OF
PRESTROKE CONTROL

READ NE — 300

READ Q — 302

DETERMINE PRESTROKE AMOUNT BY NE — 304

DETERMINE Qp BY NE — 306

308
$Q < Qp$ — NO

YES — 310

INHIBIT PRESTROKE CONTROL

312
PERFORM PRESTROKE CONTROL

RETURN

18